# EUROPEAN PATENT SPECIFICATION

(11) **EP 2 780 623 B1**
(45) Date of publication and mention of the grant of the patent: **25.07.2018**
(21) Application number: 12850496.6
(22) Date of filing: 16.11.2012
(51) Int. Cl.: F16L 55/18, F16L 55/26, B08B 9/043, B29C 63/48, E03F 9/00

(54) **Device and system for removal of pipe renovation material from pipe and use of such a device**
Vorrichtung und System zum Entfernen von Rohrerneuerungsmaterial von einem Rohr und Verwendung dieser Vorrichtung
Dispositif et système pour retirer d'une conduite des matières issues de sa renovation et utilisation d'un tel dispositif

(30) Priority: 17.11.2011 FI 20116146
(43) Date of publication of application: 24.09.2014
(73) Proprietor: Picote Solutions Oy Ltd, 06450 Porvoo (FI)
(72) Inventor: LOKKINEN, Mika, FI-06450 Porvoo (FI); LOKKINEN, Juho, FI-06450 Porvoo (FI)
(74) Representative: LEITZINGER OY
(86) International application number: PCT/FI2012/051131
(87) International publication number: WO 2013/072567

(56) References cited:
- EP-A- 0 697 558
- NL-A- 6 804 149
- US-A- 4 770 562
- US-A- 5 778 937

## Description

### FIELD OF THE INVENTION

The invention relates to a grinding device for removing pipe renovation material from a pipe according to the preamble of claim 1. Further, the invention relates to a system for removing pipe renovation material from a pipe according to the preamble of claim 5. Moreover, the invention relates to the use of a grinding device.

### PRIOR ART

Pipes, such as water and sewage pipes, approaching the end of their service life may be renovated e.g. by lining or coating the inside of an old pipe or by mounting a new pipe into an old pipe. An epoxy resin-impregnated polyester liner, for example, that is slipped into a pipe to be renovated can be used in lining. After being slipped in, excess pressure is maintained inside the liner until the epoxy resin cures to its shape conforming to the walls of the old pipe. Modern technology allows even highly complex pipes to be lined. However, it is possible that the actual lining step fails or that maintaining the excess pressure does not succeed because of a power failure or a human error, for example. As a result, the lining is often not against the sides of the old pipes but causes a blockage or a narrowing in the pipe and the epoxy resin cures. In that case the failed renovation has to be fixed by removing at least some of the lining in the pipe or by replacing at least part of the pipe line, which requires disassembling building structures. Disassembling of structures and replacing a pipe line with a new one is not only extremely expensive but also slow. For this reason it would be advantageous to remove the lining at least from the pipe section where lining failed in order to allow a new lining attempt to be made.

In prior art solutions lining is removed by using sanding plates and/or grinding chains rotated inside the pipe. However, an extremely good resistance to wear is required of pipe renovation materials, such as epoxy resin, so their removal by sanding plates or grinding chains is very slow. Moreover, a lot of sanding material is consumed and plenty of dust is formed. Further still, a sanding device is difficult to carry forward in a complex pipe line. During a working day, typically only a few meters of epoxy resin impregnated lining is managed to be ground, which means that a long pipe line takes several days to open. Moreover, it must be seen to that pipe walls opened by sanding are also cleaned of the pipe renovation material.

### OBJECT OF THE INVENTION

The object of the invention is to provide a grinding device and a system that allow pipe renovation material to be removed faster and/or more efficiently than the prior art solutions. Moreover, the object of the invention is to provide the use of a grinding device.

### BRIEF DESCRIPTION OF THE INVENTION

There is provided a grinding device according to claim 1 for removing pipe renovation material from a pipe. The grinding device comprises at least one cutter, a body and fastening means for fastening the grinding device to a rotation shaft. The body and at least one cutter are made of a single piece, wherein the at least one cutter extends from a long side of the grinding device parallel with the rotation shaft beyond a forward direction end of the body for grinding pipe renovation material both in the forward direction of the grinding device and in a direction transverse to the forward direction.

According to an embodiment, a piece comprising the body and the at least one cutter has a diameter of at most 70% of the length of the piece.

According to an embodiment, a piece comprising the body and the at least one cutter has a diameter of at least 30% of the length of the piece.

According to an embodiment, a piece comprising the body and the at least one cutter has a length that is at least equal to an inner diameter of the pipe to be milled.

According to an embodiment, a piece comprising the body and the at least one cutter has a diameter that is at least half of the inner diameter of the pipe to be milled.

According to an embodiment, the grinding device comprises a pressure-bearing arrangement having an outer surface that is arranged to remain stationary in relation to the rotation shaft of the grinding device when the grinding device rotates.

There is further provided a system for removing pipe renovation material from a pipe according to claim 5, the system comprising a rotation shaft, which is flexible but stiff in thrust, and a crank for rotating the rotation shaft. The system further comprises a grinding device comprising at least one cutter, a body, an opening for a rotation shaft provided at an end opposite to the forward direction end and fastening means for fastening the grinding device to the rotation shaft and grinding means for grinding pipe renovation material both in a forward direction of the grinding device and in a direction transverse to the forward direction.

According to an embodiment, the grinding device comprises at least one cutter and a body accomplished of a single piece.

According to an embodiment, a piece comprising the body of the grinding device and the at least one cutter has a diameter of at most 70% of the length of the piece.

According to an embodiment, a piece comprising the body of the grinding device and the at least one cutter has a diameter of at least 30% of the length of the piece.

According to an embodiment, the system further comprises a cover tube at least partly surrounding the rotation shaft.

According to an embodiment, the grinding device is provided with a pressure-bearing system which is arranged to receive the rotation shaft and whose surface arranged to be set against the cover tube of the pressure bearing is arranged to remain stationary in relation to the cover tube when the grinding device rotates.

According to an embodiment, the grinding device is arranged to grind pipe renovation material from a pipe whose inner diameter is at most equal to the length of the grinding device; from a pipe whose inner diameter is at most twice the diameter of the grinding device; and/or from a pipe whose inner diameter is at most equal to the length of the grinding device and at most twice the diameter of the grinding device.

There is further provided a use of a grinding device according to claim 11 for removing pipe renovation material from a pipe having an inner diameter of a size at most equal to the length of the grinding device.

According to an embodiment there is provided a use of a grinding device for removing pipe renovation material from a pipe having an inner diameter of a size at most equal to the length of the grinding device and at most twice the diameter of the grinding device.

According to an embodiment there is provided a use of a grinding device for removing pipe renovation material from a pipe blocked by pipe renovation material.

The following detailed description of the invention discloses one preferred embodiment of the disclosed device and method.

### DETAILED DESCRIPTION OF THE INVENTION

In the following the invention is described in more detail with reference to preferred embodiments presented by way of example and to the attached figures, wherein:
Figure 1 shows a grinding device according to an embodiment of the invention;
Figure 2 shows a grinding device according to an embodiment of the invention; and
Figure 3 shows a grinding device according to an embodiment of the invention in a pipe to be milled.

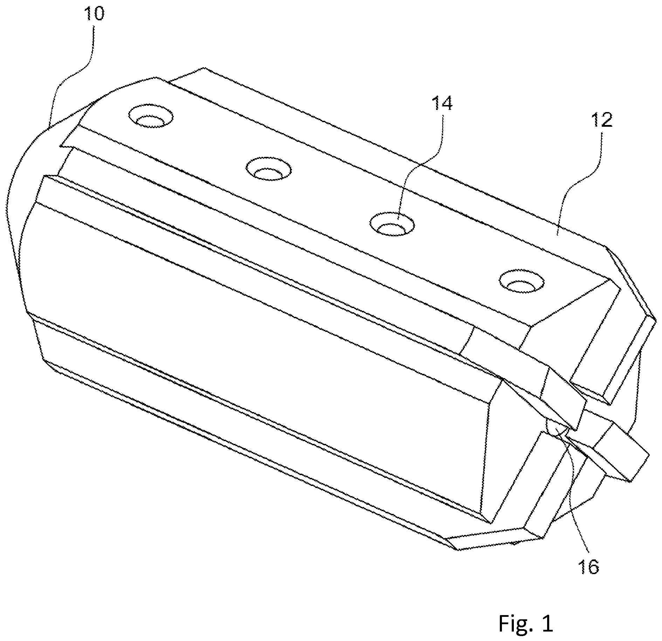

Figure 1 shows a grinding device according to an embodiment of the invention for removing pipe renovation material from a pipe. After failed pipe renovations, particularly after failed pipe lining operations, it is necessary have the pipe renovation material removed from the pipe. In connection with lining operations this means removing the lining and the epoxy resin used for impregnating it from the pipe to be renovated. A lining impregnated with epoxy resin is typically several millimetres thick and usually installed at one go along the entire pipe length. A failed lining of a long pipe thus requires a large amount of renovation material to be removed from the pipe. In addition, cured epoxy resin is extremely hard and, when being milled, it is to be taken into account that the pipe, which is usually made of cast iron, must remain undamaged to allow the re-lining of the pipe to be attempted.

The device of the embodiment in Figure 1 comprises a body 10, four cutters 12 and fastening means 14 for fastening a rotation shaft. The body 10 and the cutters 12 are made of a single piece, so there are no joints between them that might open in use. It has been observed that fastening of cutters to the body by welding, soldering, pressing, screwing or otherwise does not hold when the grinding device is rotated forcefully in the pipe while grinding the epoxy resin impregnated lining. An entity of the body 10 and the cutters 12 machined from a single piece is preferably annealed to reduce dulling of the cutters 12. Preferably the entity is made of steel, and annealed.

The number of the cutters 12 may be other than four and it is also possible to use a grinding device having one, two, three, five, six or eight cutters. If necessary, even more cutters may be used. The cutters 12 extend from a long grinding device side parallel with the rotation shaft beyond a forward direction end of the grinding device. In that case, as the grinding device rotates in the pipe and is being pushed forward at the same time, it grinds material not only in the forward direction but also in a direction transverse to the forward direction, i.e. from the sides of the grinding device. This is a significant difference compared with prior art grinding plates and grinding chains based on centrifugal force, in which the rotating motion causes the grinding parts to come into contact mostly with areas on the sides of the device, the removal of renovation material being in practice based on its wearing. High torque is achieved for the solid piece of the embodiment formed by the cutters and the body, the cutters grinding chips from the renovation material instead of wearing it. In addition, the cutters located along the forward direction of the piece remove renovation material efficiently when the grinding device is pushed forward in the pipe.

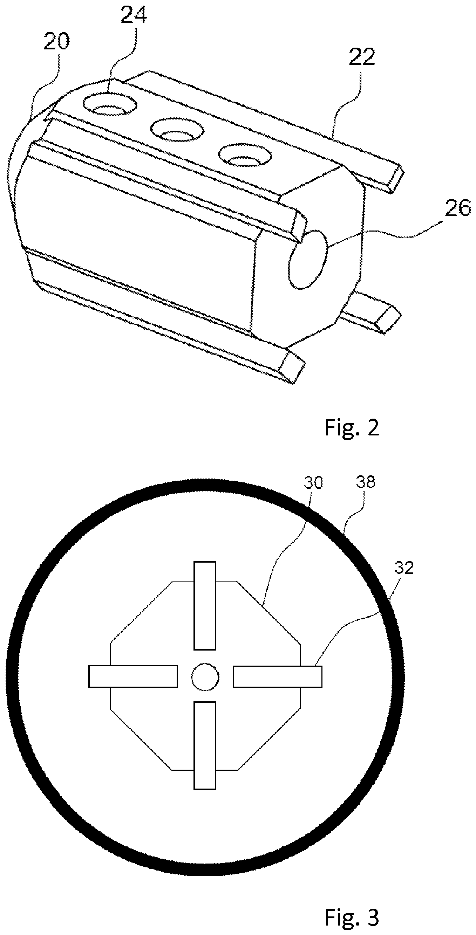

The cutters 12 are preferably bevelled or rounded at corners between the long side and the ends of the grinding device, the grinding device thus advancing better in the pipe bends. Alternatively, separate cutters may be used on the sides of the grinding device and in the forward direction end, although also in that case it may be advantageous to round or bevel the corners of the cutters. Figure 2 shows a cutter arrangement according to an embodiment provided with cutters 22 which are parallel with the rotation shaft and extend parallel with a long side of the grinding device across a forward direction end, but the forward direction end is not provided with cutters.

The fastening means of the grinding device may comprise an opening arranged for the rotation shaft in the middle 16, 26 of the grinding device and threaded holes 14, 24 for screws or bolts, with a connection to the opening. In that case the grinding device may be fastened to the rotation shaft by placing the rotation shaft into the opening 16, 26 in the middle of the grinding device and securing it in place by screwing the screws or bolts into the holes 14, 24 provided for them, the rotation shaft thus pressing into contact with the grinding device. Alternatively, an end of the rotation shaft may be provided with an opening or a shaping arranged to receive a pin or some other locking mechanism. In that case the rotation shaft may be locked to the grinding device by pushing the rotation shaft through the opening in the middle of the grinding device, fastening the pin and locking it to the forward direction end of the grinding device so that it endures the turning and moving of the grinding device in relation to the rotation shaft.

The rotation shaft used in the grinding device is a rotation shaft that is flexible but stiff in thrust, such as a steel cable. The rotation shaft is preferably provided with a cover tube at least partly surrounding it, the tube not being fastened to the rotation shaft so as to allow taking a hold of the cover tube and so that it does not revolve as the rotation shaft rotates. The cover tube allows the rotation shaft and the grinding device fastened to an end thereof to be guided in the tube in a desired manner. The grinding device is preferably provided with a pressure bearing at an opening provided at an end opposite to the forward direction end. The pressure bearing is arranged to receive the rotation shaft, in which case a cover tube, if any, surrounding the rotation shaft remains outside the pressure bearing. When the rotation shaft is being pushed, while holding the cover tube, the cover tube presses against the pressure bearing of the grinding device, the outer surface of the pressure bearing that is against the cover tube remaining stationary as the grinding device rotates, thus preventing unnecessary wearing of the cover tube end. The rotation shaft is rotated by a crank, which may be electrically operated, although preferably the crank is hydraulic to allow sufficient torque to be reliably provided.

Figure 3 shows a grinding device according to an embodiment in a pipe to be milled. The pipe has an inner diameter substantially greater than the diameter of the grinding device. The grinding device diameter may be understood to refer to the greatest dimension perpendicular to the rotation shaft opening, i.e. typically a distance from an outer edge of a cutter 32 to an outer edge of a cutter on the opposite side. The grinding device length may be understood to refer to the greatest length parallel to the rotation shaft opening from the piece formed by the body 30 and the cutters 32. The dimensioning of the grinding device in relation to the size of the pipe to be milled affects the behaviour of the grinding device in the pipe. For the grinding device to grind pipe renovation material both in the forward direction and in the direction transverse to it, without substantially damaging the pipe itself, the diameter and length of the grinding device must be in specific proportions to one another and to the inner diameter of the pipe to be milled.

It has been observed that a preferred diameter of the grinding device is 40 to 70% of the inner diameter of the pipe and particularly preferably the grinding device diameter is 50 to 60% of the inner diameter of the pipe. A preferred length of the grinding device is 70 to 200% of the inner diameter of the pipe and particularly preferably the grinding device length is 80 to 150% of the inner diameter of the pipe. A preferred diameter of the grinding device is at least 20% of the length of the grinding device and particularly preferably the diameter of the grinding device is at least 30% of the length of the grinding device. A preferred diameter of the grinding device is at most 80% of the length of the grinding device and particularly preferably the diameter of the grinding device is at most 70% of the length of the grinding device. For example, a grinding device fitting into a pipe having an inner diameter of 100mm might have e.g. a diameter of 55mm and a length of 100mm.

Also the stiffness of the rotation shaft used has an essential influence on an optimal diameter and length of the grinding device, therefore the proportions given may differ for specific rotation shafts from those disclosed here. The ratio of the grinding device diameter and length to the inner diameter of the pipe to be milled, together with the rotation shaft stiffness, should provide a grinding device operation in which the grinding device grinds pipe renovation material efficiently but does not hit the pipe walls with excess force so as to maintain the pipe substantially undamaged to allow renovation by re-lining to be carried out. In addition, the grinding device should be able to advance in the bends of the pipe grinding at the same time the pipe renovation material and without substantially damaging the pipe itself even at a bend.

## Claims

1. A grinding device for removing pipe renovation material from a pipe (38), the grinding device comprising at least one cutter (12, 22, 32), a body (10, 20, 30), an opening for a rotation shaft provided at an end opposite to the forward direction end and fastening means (14, 16, 24, 26) for fastening the grinding device to the rotation shaft, the grinding device being **characterized in that** the body (10, 20, 30) and the at least one cutter (12, 22, 32) are made of a single piece, wherein the at least one cutter extends from a long side of the grinding device parallel with the rotation shaft beyond a forward direction end of the body for grinding pipe renovation material both in the forward direction of the grinding device and in a direction transverse to the forward direction as the grinding device is rotated and pushed forward by pushing the rotation shaft.

2. A grinding device as claimed in claim 1, **characterized in that** a piece comprising the body (10, 20, 30) and the at least one cutter (12, 22, 32) has a diameter of at most 70% of the length of the piece.

3. A grinding device as claimed in claim 1, **characterized in that** a piece comprising the body (10, 20, 30) and the at least one cutter (12, 22, 32) has a diameter of at least 30% of the length of the piece.

4. A grinding device as claimed in claim 1, **characterized in that** it comprises a pressure-bearing arrangement having an outer surface that is arranged to remain stationary in relation to the rotation shaft of the grinding device when the grinding device rotates.

5. A system for removing pipe renovation material from a pipe (38), the system comprising:
- a rotation shaft, which is flexible but stiff in thrust;
- a crank for rotating the rotation shaft;
the system being **characterized in that** the system further comprises:
- a grinding device comprising at least one cutter (12, 22, 32), a body (10, 20, 30), an opening for said rotation shaft provided at an end opposite to the forward direction end and fastening means (14, 16, 24, 26) for fastening the grinding device to said rotation shaft, and the at least one cutter extends from a long side of the grinding device parallel with said rotation shaft beyond a forward direction end of the body for grinding pipe renovation material both in the forward direction of the grinding device and in a direction transverse to the forward direction as the grinding device is rotated and pushed forward by pushing the rotation shaft.

6. A system as claimed in claim 5, **characterized in that** the grinding device comprises at least one cutter (12, 22, 32) and a body (10, 20, 30) made of a single piece.

7. A system as claimed in claim 6, **characterized in that** a piece comprising the body (10, 20, 30) of the grinding device and the at least one cutter (12, 22, 32) has a diameter of at most 70% of the length of the piece.

8. A system as claimed in claim 6, **characterized in that** a piece comprising the body (10, 20, 30) of the grinding device and the at least one cutter (12, 22, 32) has a diameter of at least 30% of the length of the piece.

9. A system as claimed in claim 5, **characterized in that** the system further comprises a cover tube at least partly surrounding the rotation shaft.

10. A system as claimed in claim 5, **characterized in that** the grinding device is provided with a pressure-bearing system which is arranged to receive the rotation shaft and whose surface arranged to be set against the cover tube of the pressure bearing is arranged to remain stationary in relation to the cover tube when the grinding device rotates.

11. Use of a grinding device as claimed in any one of claims 1 to 4 for removing pipe renovation material from a pipe (38) having an inner diameter of a size at most equal to the length of the grinding device.

12. Use of a grinding device as claimed in any one of claims 1 to 4 for removing pipe renovation material from a pipe (38) having an inner diameter of a size at most equal to the length of the grinding device and at most twice the diameter of the grinding device.

13. Use of a grinding device as claimed in any one of claims 1 to 4 for removing pipe renovation material from a pipe (38) blocked by pipe renovation material.

## Patentansprüche

1. Schleifgerät zum Beseitigen von Rohrerneuerungsmaterial von einem Rohr (38), wobei das Schleifgerät zumindest eine Schneidvorrichtung (12, 22, 32), einen Körper (10, 20, 30), eine Öffnung für eine Drehwelle, die an einem Ende gegenüber dem Vorwärtsrichtungsende vorgesehen ist, und Befestigungsmittel (14, 16, 24, 26) zum Befestigen des Schleifgeräts an der Drehwelle umfasst, wobei das Schleifgerät **dadurch gekennzeichnet ist, dass** der Körper (10, 20, 30) und die zumindest eine Schneidvorrichtung (12, 22, 32) aus einem einzelnen Stück hergestellt sind, wobei die zumindest eine Schneidvorrichtung von einer langen Seite des Schleifgeräts her parallel zur Drehwelle über ein Vorwärtsrichtungsende des Körpers hinaus zum Schleifen von Rohrerneuerungsmaterial sowohl in der Vorwärtsrichtung des Schleifgeräts als auch in einer schräg zur Vorwärtsrichtung verlaufenden Richtung verläuft, wenn das Schleifgerät gedreht und durch Schieben der Drehwelle vorwärtsgeschoben wird.

2. Schleifgerät nach Anspruch 1, **dadurch gekennzeichnet, dass** ein Stück, das den Körper (10, 20, 30) und die zumindest eine Schneidvorrichtung (12, 22, 32) umfasst, einen Durchmesser von höchstens 70% der Länge des Stücks aufweist.

3. Schleifgerät nach Anspruch 1, **dadurch gekennzeichnet, dass** ein Stück, das den Körper (10, 20, 30) und die zumindest eine Schneidvorrichtung (12, 22, 32) umfasst, einen Durchmesser von zumindest 30% der Länge des Stücks aufweist.

4. Schleifgerät nach Anspruch 1, **dadurch gekennzeichnet, dass** es eine drucktragende Anordnung umfasst, die eine Außenfläche aufweist, welche dazu angeordnet ist, bezüglich der Drehwelle des Schleifgeräts unbeweglich zu bleiben, wenn das Schleifgerät dreht.

5. System zum Beseitigen von Rohrerneuerungsmaterial von einem Rohr (38), das System umfassend:
- eine Drehwelle, die flexibel, im Schub jedoch steif ist;
- eine Kurbel zum Drehen der Drehwelle;
wobei das System **dadurch gekennzeichnet ist, dass** das System ferner folgendes umfasst:
- ein Schleifgerät, umfassend zumindest eine Schneidvorrichtung (12, 22, 32), einen Körper (10, 20, 30), eine Öffnung für eine Drehwelle, die an einem Ende gegenüber dem Vorwärtsrichtungsende vorgesehen ist, und Befestigungsmittel (14, 16, 24, 26) zum Befestigen des Schleifgeräts an der Drehwelle, und wobei die zumindest eine Schneidvorrichtung von einer langen Seite des Schleifgeräts her parallel zur Drehwelle über ein Vorwärtsrichtungsende des Körpers hinaus zum Schleifen von Rohrerneuerungsmaterial sowohl in der Vorwärtsrichtung des Schleifgeräts als auch in einer schräg zur Vorwärtsrichtung verlaufenden Richtung verläuft, wenn das Schleifgerät gedreht und durch Schieben der Drehwelle vorwärtsgeschoben wird.

6. System nach Anspruch 5, **dadurch gekennzeichnet, dass** das Schleifgerät zumindest eine Schneidvorrichtung (12, 22, 32) und einen Körper (10, 20, 30) umfasst, die aus einem einzelnen Stück hergestellt sind.

7. System nach Anspruch 6, **dadurch gekennzeichnet, dass** ein Stück, das den Körper (10, 20, 30) des Schleifgeräts und die zumindest eine Schneidvorrichtung (12, 22, 32) umfasst, einen Durchmesser von höchstens 70% der Länge des Stücks aufweist.

8. System nach Anspruch 6, **dadurch gekennzeichnet, dass** ein Stück, das den Körper (10, 20, 30) des Schleifgeräts und die zumindest eine Schneidvorrichtung (12, 22, 32) umfasst, einen Durchmesser von zumindest 30% der Länge des Stücks aufweist.

9. System nach Anspruch 5, **dadurch gekennzeichnet, dass** das System ferner ein Abdeckrohr umfasst, das die Drehwelle zumindest teilweise umgibt.

10. System nach Anspruch 5, **dadurch gekennzeichnet, dass** das Schleifgerät mit einem drucktragenden System versehen ist, das zum Aufnehmen der Drehwelle angeordnet ist, und dessen Oberfläche, die dazu angeordnet ist, gegen das Abdeckrohr des Drucklagers gelagert zu sein, dazu angeordnet ist, bezüglich des Abdeckrohrs unbeweglich zu bleiben, wenn das Schleifgerät dreht.

11. Gebrauch eines Schleifgeräts nach einem der Ansprüche 1 bis 4 zum Beseitigen von Rohrerneuerungsmaterial von einem Rohr (38) mit einem Innendurchmesser einer Größe, die höchstens gleich der Länge des Schleifgeräts ist.

12. Gebrauch eines Schleifgeräts nach einem der Ansprüche 1 bis 4 zum Beseitigen von Rohrerneuerungsmaterial von einem Rohr (38) mit einem Innendurchmesser einer Größe, die höchstens gleich der Länge des Schleifgeräts ist und höchstens das Zweifache des Durchmessers des Schleifgeräts beträgt.

13. Gebrauch eines Schleifgeräts nach einem der Ansprüche 1 bis 4 zum Beseitigen von Rohrerneuerungsmaterial von einem Rohr (38), das durch Rohrerneuerungsmaterial verstopft ist.

## Revendications

1. Dispositif de broyage pour retirer du matériau de rénovation de tuyaux d'un tuyau (38), le dispositif de broyage comprenant au moins un couteau (12, 22, 32), un corps (10, 20, 30), une ouverture pour un arbre rotatif prévue sur une extrémité opposée à l'extrémité de direction avant et des moyens de fixation (14, 16, 24, 26) pour fixer le dispositif de broyage à l'arbre rotatif, le dispositif de broyage étant **caractérisé en ce que** le corps (10, 20, 30) et l'au moins un couteau (12, 22, 32) sont faits d'une seule pièce, dans lequel l'au moins un couteau s'étend depuis un côté long du dispositif de broyage parallèlement à l'arbre rotatif au-delà d'une extrémité de direction avant du corps pour broyer du matériau de rénovation de tuyaux à la fois dans la direction avant du dispositif de broyage et dans une direction transversale à la direction avant lorsque le dispositif de broyage est tourné et poussé vers l'avant en poussant l'arbre rotatif.

2. Dispositif de broyage selon la revendication 1, **caractérisé en ce qu'**une pièce comprenant le corps (10, 20, 30) et l'au moins un couteau (12, 22, 32) a un diamètre d'au plus 70 % de la longueur de la pièce.

3. Dispositif de broyage selon la revendication 1, **caractérisé en ce qu'**une pièce comprenant le corps (10, 20, 30) et l'au moins un couteau (12, 22, 32) a un diamètre d'au moins 30 % de la longueur de la pièce.

4. Dispositif de broyage selon la revendication 1, **caractérisé en ce qu'**il comprend un agencement de palier de pression ayant une surface extérieure qui est agencée pour rester fixe par rapport à l'arbre rotatif du dispositif de broyage lorsque le dispositif de broyage tourne.

5. Système pour retirer du matériau de rénovation de tuyaux d'un tuyau (38), le système comprenant :
- un arbre rotatif qui est flexible mais rigide en poussée ;
- une manivelle pour tourner l'arbre rotatif ;
le système étant **caractérisé en ce que** le système comprend en outre :
- un dispositif de broyage comprenant au moins un couteau (12, 22, 32), un corps (10, 20, 30), une ouverture pour ledit arbre rotatif prévue sur une extrémité opposée à l'extrémité de direction avant et des moyens de fixation (14, 16, 24, 26) pour fixer le dispositif de broyage audit arbre rotatif, et l'au moins un couteau s'étend depuis un côté long du dispositif de broyage parallèlement audit arbre rotatif au-delà d'une extrémité de direction avant du corps pour broyer le matériau de rénovation de tuyaux à la fois dans la direction avant du dispositif de broyage et dans une direction transversale à la direction avant lorsque le dispositif de broyage est tourné et poussé vers l'avant en poussant l'arbre rotatif.

6. Système selon la revendication 5, **caractérisé en ce que** le dispositif de broyage comprend au moins un couteau (12, 22, 32) et un corps (10, 20, 30) faits d'une seule pièce.

7. Système selon la revendication 6, **caractérisé en ce qu'**une pièce comprenant le corps (10, 20, 30) du dispositif de broyage et l'au moins un couteau (12, 22, 32) a un diamètre d'au plus 70 % de la longueur de la pièce.

8. Système selon la revendication 6, **caractérisé en ce qu'**une pièce comprenant le corps (10, 20, 30) du dispositif de broyage et l'au moins un couteau (12, 22, 32) a un diamètre d'au moins 30 % de la longueur de la pièce.

9. Système selon la revendication 5, **caractérisé en ce que** le système comprend en outre un tube de couverture entourant au moins partiellement l'arbre rotatif.

10. Système selon la revendication 5, **caractérisé en ce que** le dispositif de broyage est doté d'un système de palier de pression qui est agencé pour recevoir l'arbre rotatif et dont la surface agencée pour être placée contre le tube de couverture du palier de pression est agencée pour rester fixe par rapport au tube de couverture lorsque le dispositif de broyage tourne.

11. Utilisation d'un dispositif de broyage selon l'une quelconque des revendications 1 à 4 pour retirer du matériau de rénovation de tuyaux d'un tuyau (38) ayant un diamètre intérieur d'une taille au plus égale à la longueur du dispositif de broyage.

12. Utilisation d'un dispositif de broyage selon l'une quelconque des revendications 1 à 4 pour retirer du matériau de rénovation de tuyaux d'un tuyau (38) ayant un diamètre intérieur d'une taille au plus égale à la longueur du dispositif de broyage et au moins le double du diamètre du dispositif de broyage.

13. Utilisation d'un dispositif de broyage selon l'une quelconque des revendications 1 à 4 pour retirer du matériau de rénovation de tuyaux d'un tuyau (38) bloqué par du matériau de rénovation de tuyaux.
